# EUROPEAN PATENT SPECIFICATION

(11) **EP 3 228 915 B1**
(45) Date of publication and mention of the grant of the patent: **09.01.2019**
(21) Application number: 17165408.0
(22) Date of filing: 07.04.2017
(51) Int. Cl.: F16L 27/08, F16L 37/23, F16L 37/32

(54) **QUICK-RELEASE COUPLING WITH INTEGRATED SWIVEL JOINT**
SCHNELLKUPPLUNG MIT INTEGRIERTEM DREHGELENK
ACCOUPLEMENT RAPIDE COMPRENANT UNE ARTICULATION PIVOTANTE

(30) Priority: 07.04.2016 IT UA20162384
(43) Date of publication of application: 11.10.2017
(73) Proprietor: Faster S.p.A., 26027 Rivolta d'Adda (IT)
(72) Inventor: RUSCONI, Paolo, 26027 Rivolta d'Adda (IT); ROSSETTI, Daniele, 26025 Pandino (IT); POLGATI, Igor, 26020 Agnadello (IT)
(74) Representative: Torti, Carlo Maria Emilio

(56) References cited:
- EP-A1- 2 148 122
- DE-A1- 19 914 318

## Description

### FIELD OF THE INVENTION

The object of the present invention is a compact female coupling, in particular used for making the hydraulic connection between the hydraulic circuit assembled on board a machine and the equipment assembled on articulated arms.

In this particular type of applications, as well as in any other application in which the occurrence of a relative rotation is provided between the tubes connecting the male and female couplings, respectively, there is a need to avoid the female coupling and the male coupling from rotating one with respect to the other due to the rotating movement transmitted by the tubes themselves.

The present invention relates to a quick-release coupling, in particular a female coupling of the flat face type, particularly designed for such applications.

### BACKGROUND ART

In use, the male coupling and the female coupling are each connected to a hydraulic line, essentially a tube, adapted to convey the working fluid, generally pressurized oil.

There is a need to avoid the rotation, which occurs in certain applications, of portions of tube of the hydraulic lines connected to the couplings, from resulting in a relative rotation of the couplings themselves.

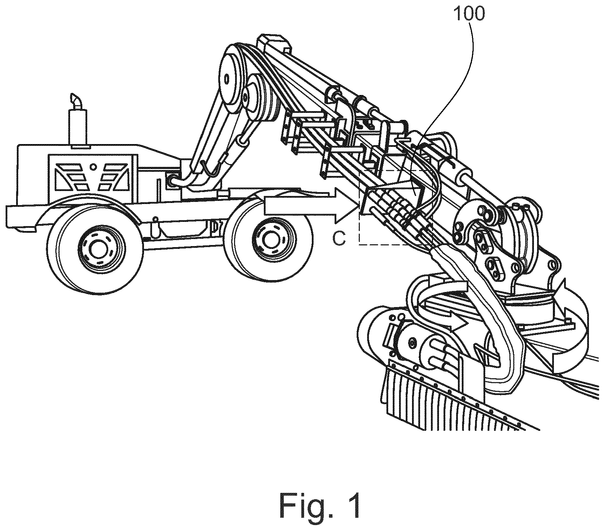

The typical circumstance which occurs on machines and is depicted for example in the application in figure 1, provides the female coupling to be stably fixed to a support plate 100 provided on the arm of the machine, and the male coupling to be connected to the tubes of the utility.

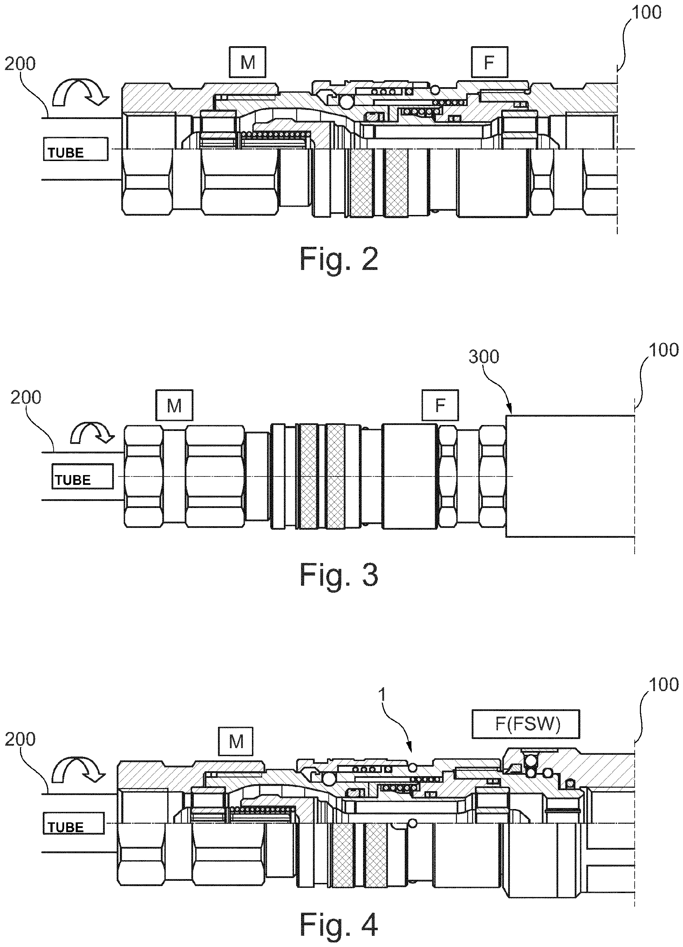

The circumstance of mutual connection of the male and female couplings is depicted in figure 2, which shows a sectional view of a male coupling M which is coupled onto a female coupling F which in turn is connected to a support plate 100.

A tube 200 in hydraulic connection with the utility is connected to the male coupling M. A rotation of tube 200 results in the transfer of a torsional moment to the male coupling M, which tends to rotate with respect to the female coupling F, which as mentioned, is restrained in a fixed manner to the support plate 100.

The relative rotation of the male coupling with respect to the female coupling does not at all fall within the normal functionalities of the quick-release coupling and therefore potentially is the cause of a premature deterioration of the sealing gasket arranged at the interface between male coupling and female coupling, with subsequent possible leakage of pressurized oil.

In order to avoid the relative rotation of the male coupling M with respect to the female coupling F, the prior art is known to provide an additional swivel joint 300, commonly called a "swivel" joint in the sector, which is interposed between the female coupling F and the support plate 100 or the tube to which the female coupling F is connected, and which allows the rotation of the whole coupling unit together with tube 200 relatively to plate 100.

Due to the swivel joint 300 therefore, the rotation of tube 200 not only results in a rotation of the male coupling M, but also a rotation of the female coupling F, which is dragged in rotation and therefore rotates together with male M with respect to the support plate 100.

The swivel joint 300 of type known from the prior art comprises a first part connectable in a fixed manner to the female coupling F, a second part connectable in a fixed manner to the support plate 100, and is configured so that said first part is free to rotate with respect to said second part, about the longitudinal axis of the joint itself, which substantially is cylindrically shaped.

Such a solution of known type however is not free from drawbacks.

A first drawback lies in the fact that the use of a swivel joint, or additional swivel joint, to be associated rearwardly with the female coupling results in an increase in the overall volumes of the coupling unit.

A second important drawback is associated with the need to run type-approval tests not only on the male and female couplings but also on the additional joint.

Again, the fact of providing an additional component, among other things provided with the possibility of relative rotation between the parts thereof, increases the number of critical points at which oil leakages could occur.

Indeed, the interposition of the swivel joint between the quick-release coupling and fixing plate, for example implies the introduction of three more sealing points, specifically:
a first additional sealing point between female coupling and swivel joint;
a second additional sealing point between swivel joint and fixing plate;
a third additional sealing point at the inner seal of the swivel joint, where the rotation between the two parts of the joint occurs.

Not last, the fact of having to provide an additional component also results in an increase in the production costs because it requires the production of a separate component, and therefore a higher cost for the client who has to buy it.

Further examples of quick-release couplings or attachments according to the background art are known from documents DE 19914318A1 and EP 2148122A1.

Document DE 19914318A1 discloses a device for connecting hydraulic lines to a second coupling socket, wherein the device has a connector socket to receive and fix a first hydraulic connector. The first hydraulic connector has a first connector valve. The coupling socket has a socket valve, and an actuating lever. The lever transfers the first socket valve and the first connector valve into the open position when the first hydraulic connector is fixed in the connector socket. A second hydraulic connector is connected to an end of the coupling socket remote from the connector socket.

### SUMMARY

It is the object of the present invention to overcome the limitations of systems known from the background art and summarized above.

Within the scope of such a task, it is the object of the present invention to make available a quick-release coupling which allows the problems illustrated above involving known solutions to be overcome, thus at the same time allowing a decrease in the overall volumes with respect to the solutions known from the background art, a decrease in the number of fluid sealing points, and a simplification of the production, testing and type-approval processes with subsequent decrease in costs.

It is also an object of the present invention to make available a coupling which, with respect to known solutions, is an improvement in performance in terms of effort to perform the rotation, which allows the rotation also at high fluid pressures, fluid pressure involved in the coupling being equal.

This task and these and other objects which will become more apparent hereinafter are achieved by a quick release coupling as claimed in claim 1, with further embodiments thereof as defined in the dependent claims.

In particular, according to a first embodiment, the present invention relates to a quick-release coupling of the type comprising an outer ring which cooperates with a ball body and a crown of locking balls, an axially movable outer slider cooperating with said crown of locking balls, an axially movable inner slider, an axial valve body and a first inner body, said coupling further comprising, in the rear area of said coupling, a second inner body having cylindrical symmetry comprising a front portion fixed to said ball body, an intermediate portion and a rear portion (83) which extend rearwardly with respect to said ball body, said quick-release coupling further comprising an adapter body rotatably associated with said intermediate portion and rear portion of said second inner body, at least one bearing comprising at least a crown of balls being interposed between said second inner body and said adapter body, the coupling further comprising the additional features as recited in claim 1.

According to the invention, said front portion of said second inner body has an outer diameter, said intermediate portion has an outer diameter smaller than said outer diameter of said front portion, and said rear portion has an outer diameter in turn smaller than the outer diameter of said intermediate portion.

According to the invention, said adapter body has a front portion and a rear portion and an inner profile which is counter-shaped with respect to the outer profile of said second inner body.

According to one embodiment, said front portion of said adapter body faces said intermediate portion of said second inner body, and said rear portion of said adapter body faces said rear portion of said second inner body.

According to one embodiment, said rear portion of said adapter body which faces said rear portion of said second inner body further comprises at least one housing seat housing a sealing element configured to form the fluid seal between said adapter body and the second inner body.

According to one embodiment, said sealing element comprises a sliding shoe and an O-ring.

According to one embodiment, said sliding shoe is made of PTFE or other suitable material.

According to one embodiment, said sliding shoe is housed within said housing seat so as to come into contact with said outer surface of said rear portion of said second inner body having a smaller diameter than the larger diameter of the intermediate portion, where said bearing is provided.

According to one embodiment, said bearing interposed between said second inner body and said adapter body comprises the at least one crown of balls, preferably a first crown of balls and a second crown of balls arranged in circumferential housing grooves formed on the outer surface of said intermediate portion of said second inner body and on the inner surface of said front portion of said adapter body.

According to one embodiment, said circumferential housing grooves comprise a first inner groove and a second inner groove formed at the outer surface of said intermediate portion of said second inner body, and a first outer groove and a second outer groove formed at the inner surface of said front portion of said adapter (90).

According to one embodiment, said circumferential housing grooves have a trapezoidal profile in cross-section with a longitudinal plane.

According to one embodiment, said circumferential housing grooves comprise at least a hardened surface portion designed to make contact with said balls of said crowns of balls, preferably by induction hardening.

According to one embodiment, said coupling is a female coupling.

In general, the coupling according to the present invention is of the type having substantially cylindrical shape with longitudinal extension, comprising an outer ring which cooperates with a ball body and a crown of locking balls, an axially movable outer slider which in turn cooperates with said crown of locking balls, an axially movable inner slider, an axial valve body and a first inner body, which coupling is characterized in that it further comprises a second inner body having cylindrical symmetry comprising sections having different outer diameter, arranged in the rear area of the coupling and comprising in turn a front part fixed to said ball body and a rear part which rearwardly extends with respect to said ball body, an adapter body being rotatably associated on said rear part of said second inner body, at least one bearing consisting of at least one crown of balls being interposed between said rear part of said second inner body and said adapter body.

### LIST OF THE DRAWINGS

The features and advantages of the present invention shall be clarified below by means of a description of the embodiments of the present invention depicted in the drawings, in which;
figure 1 shows a comprehensive view of equipment assembled on an articulated arm in which there are indicated the couplings which connect the hydraulic lines between machine and utility;
figure 2 shows a longitudinal sectional view of a coupling of type known from the prior art, in which the male coupling M and the female coupling are not provided with any swivel joint;
figure 3 shows the coupling of known type in figure 2 in which a swivel joint of type known from the prior art is interposed, schematized, between the female coupling F and the fixing plate;
figure 4 shows a longitudinal sectional view of the coupling according to the present invention, comprising a male coupling M of known type and a female coupling F provided with an integrated swivel joint according to the present invention;
figure 5 shows the detail of the female coupling F in figure 4 according to the present invention, in cross-section with a longitudinal plane;

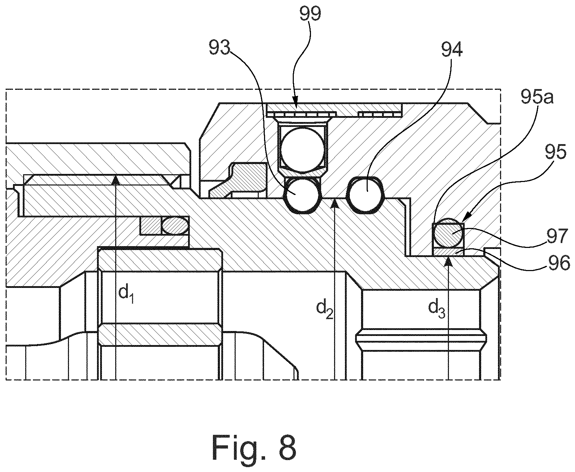

figures 6, 7 and 8 show in detail, the bearing unit and the engagement seats of the bearings of the female coupling according to the present invention.

### DETAILED DESCRIPTION OF THE INVENTION

The following description discloses an embodiment of the coupling according to the present invention.

Such a description is provided by way of non-limiting example, meaning that the present invention covers all variants of the described embodiment which fall within the scope of the claims.

Figure 1 shows a comprehensive view of equipment assembled on an articulated arm of a machine. Arrow "C" in figure 1 indicates the couplings which connect the hydraulic lines putting the hydraulic circuit of the machine in fluid communication with the utility assembled on the articulated arm.

As is deducible, the movement of the articulated arm may induce a rotation of the hydraulic connecting tube which starts from the male coupling and reaches the utility.

The rotation of the tube affects the female coupling, which is restrained to the support plate 100.

The circumstance is easier to understand from the above-described figures 2 and 3, in which figure 2 depicts a coupling of the type comprising a male coupling M and a female coupling F directly connected to the support and fixing plate 100, and figure 3 depicts a coupling comprising a male coupling M, a female coupling F, and a swivel joint 300, interposed between the rear portion of the female coupling F and the support and fixing plate 100, respectively.

The terms "front", "rear" are defined in relation to the coupling. The front part of the coupling is the front part at which the male or female coupling connects to the other female or male coupling, respectively. The rear part of the coupling is the part at which there is the connection with the hydraulic line.

Naturally, with reference to figures 2 to 4, like a hydraulic tube 200 is connected to the rear part of the male coupling M, a similar tube, shown for example in figure 1 and not depicted in figures 2 to 4, is connected to the rear part of the female coupling.

With particular reference to figure 4, it shows a quick-release coupling according to the present invention.

Such a coupling comprises a male coupling generically indicated with M and a female coupling generically indicated with numeral 1, which comprises, integrated in the rear part of said female coupling 1, a device configured to allow the relative rotation between said female coupling 1 and the fixing plate 100 or the hydraulic line to which the female coupling 1 directly is connected.

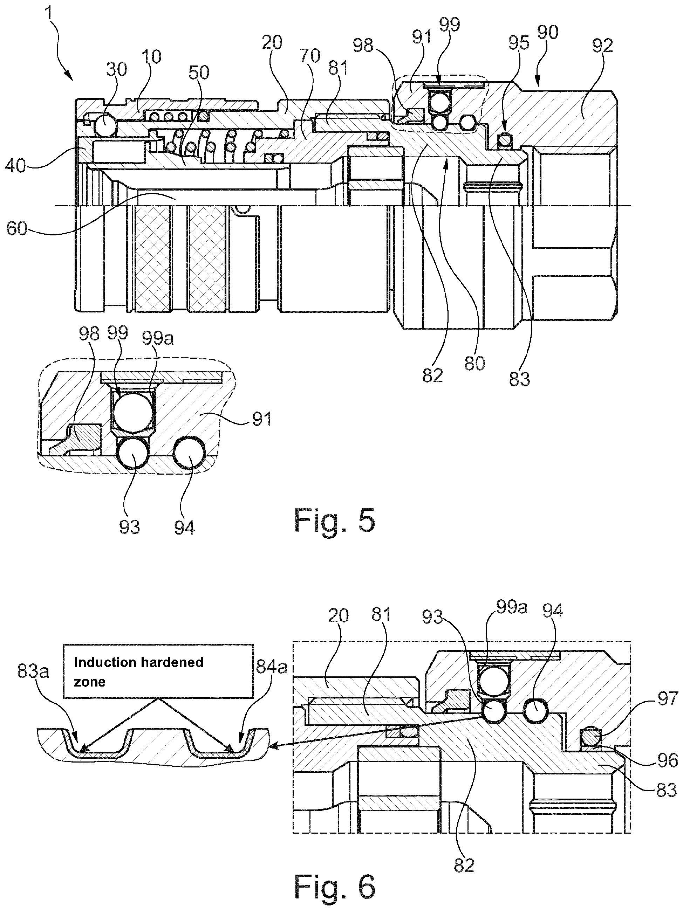

In greater detail, and with particular reference to figure 5, the female coupling 1 according to the present invention comprises a plurality of substantially cylindrical hollow bodies arranged coaxially to the longitudinal axis A of said female coupling, and an axially arranged valve body.

The female coupling 1 advantageously comprises an outer ring 10 which cooperates with a ball body 20 arranged inside said outer ring 10, and a crown of locking balls 30 which are housed in a corresponding seat formed on said ball body 20.

The crown of locking balls 30 is kept in the expanded position with the female coupling disconnected, by an outer slider 40, while it is radially movable during the coupling step with the male coupling M according to that known from the prior art.

The female coupling 1 further comprises an axially movable inner slider 50, an axial valve body 60 and a first inner body 70 adapted to touch the elastic spring which counters the sliding of said inner slider 50.

The female coupling 1 according to that described hereto further comprises a second inner body 80, it also having cylindrical symmetry and having portions with different outer diameter.

In particular, according to the preferred embodiment of the present invention shown in the accompanying drawings 4 to 7, said second inner body 80 comprises a first front portion 81 having largest threaded outer diameter d1 configured to be stably connected, preferably by means of a screw connection, to the ball body 20, an intermediate portion 82 having an outer diameter d2 which is smaller than d1, and a third rear portion 83 having an outer diameter d3 which in turn is smaller than the diameter of the intermediate portion d2.

Said rear portion 83 of said second inner body 80 extends rearwardly with respect to said ball body 20.

Each of said portions of said inner body has an inner surface and an outer surface, where the inner surface is the one facing the axis of the coupling and the outer surface is the one facing the outside of the coupling.

Said female coupling 1 further comprises an adapter body 90, it also substantially having a cylindrical hollow shape, which is rotatably associated with said second inner body 80.

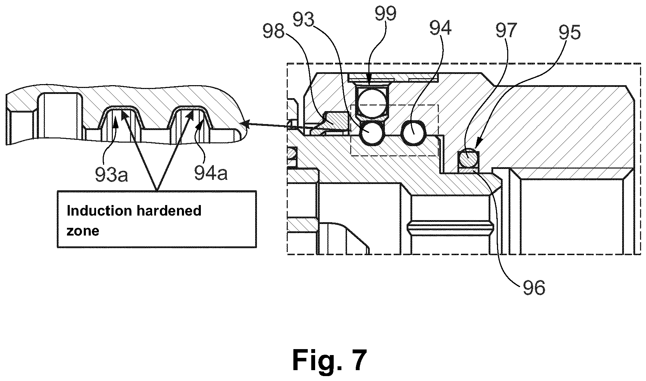

More specifically, the reference is to figures 6 and 7, said adapter body 90 is associated with the intermediate portion and the rear portion of said second inner body 80.

More specifically again, said adapter body 90 has an inner profile which is counter-shaped with respect to the outer profile of said second inner body 80, in particular it being configured to be associated with said second inner body 80 at said intermediate portion 82 and at said rear portion 83.

Said adapter body 90 advantageously comprises a front portion 91 of said adapter, and a rear portion 92. Said front portion has an inner diameter which substantially corresponds - except for the clearance required for the relative rotation between the two components - to the outer diameter of said intermediate portion 82 of said second inner body 80, while said rear portion 92 has an inner diameter which substantially corresponds - except for the clearance required for the relative rotation - to the outer diameter of said rear portion 83 of said second inner body 80.

With particular reference to figure 6, the female coupling 1 according to the present invention comprises at least one bearing interposed between said second inner body 80 and said adapter body 90.

Preferably, according to the preferred embodiment shown in the accompanying drawings, said bearing comprises at least one 93, preferably two 93, 94, crowns of balls housed in circumferential housing grooves 83a, 84a, 93a, 94a conveniently formed on the outer surface of said second inner body 80 and on the inner surface of said adapter body 90.

More specifically, with reference to the embodiment shown in detail in figures 6 and 7, said housing grooves comprise a first 83a and a second 84a inner groove formed at the outer surface of said intermediate portion 82 of said second inner body 80, and a first 93a and a second 94a outer grooves formed at the inner surface of said front portion 91 of said adapter 90.

Said second inner body 80 therefore makes the connection between the front part of the coupling, which comprises the elements that implement the functionality of the coupling, and the rotating adapter body 90.

Preferably, said second inner body 80 is made of carbon steel.

According to a preferred embodiment of the present invention shown in detail in figure 6, said first 83a and second 84a inner circumferential grooves formed at the outer surface of said intermediate portion 82 of said second inner body 80 have a trapezoidal profile, as shown in a sectional view on a longitudinal axial plane. Said inner grooves 83a and 84a also preferably have at least one surface portion intended to make contact with the hardened balls, preferably by means of induction hardening, so as to support the separation stresses between the two elements (second inner body 80 an adapter body 90) caused by the pressure of the fluid.

Similarly, with reference to figure 7, it is shown how the preferred embodiment of the present invention provides for also said adapter body 90 to be made of carbon steel, and also for the circumferential outer grooves 93a and 94a to have a trapezoidal profile, on a longitudinal section plane, and at least the surface portion intended to make contact with the hardened balls, preferably by means of induction hardening, so as to support the separation stresses between the two elements (second inner body 80 and adapter body 90) caused by the pressure of the fluid.

The balls 93 and 94 of the crowns of balls preferably are made of AISI 420 steel. They perform the function of lightning the loads and bear the separation stress given by the seal between the second inner body 80 and the adapter body 90, thus working in tangency on the hardened grooves.

The female coupling 1 according to the present invention comprises a sealing element 95 which forms the fluid seal between the adapter body 90 and the second inner body 80. Said sealing element 95 comprises a sliding shoe 96 preferably made of PTFE or of other material suitable for allowing the relative sliding between the adapter body 90 and the second inner body 80 in the rotation movements, and an O-ring 97, which preferably is made of NBR, i.e. of acrilonitrile butadiene-based synthetic rubber, or of other material suitable for the purpose.

A housing seat 95a for said sealing element 95 is conveniently formed at the inner surface of said rear portion 92 of said adapter body 90 which faces said rear portion 83 of said second inner body 80. More specifically, said sliding shoe 96 is housed in said housing seat 95a so as to come into contact with said outer surface of said rear portion 83 of said second inner body 80, while said O-ring 97 ensures the seal by pushing shoe 96 downwards, i.e. against the outer surface of said rear portion 83.

Shoe 96, made of PTFE or similar suitable material, allows a substantial decrease in the frictions during the rotation, frictions which would be much higher and which would quickly result in damage to the sealing O-ring 97 if such a shoe were not provided.

Returning to the configuration of the second inner body 80, as mentioned, it has portions 81, 82, 83 with a different diameter along the longitudinal extension thereof. In order to obtain the least resistance possible to rotation, the diameter on which the sealing element 95 exerts the fluid seal has to be as small as possible.

In order to obtain such a technical result, said housing seat 95a of said sealing element 95 is conveniently formed at the rear portion 92 of said adapter body 90 so that the seal occurs on the rear portion 83 of said second inner body 80 having the smallest diameter d3.

The fact that the stresses due to the pressure of the fluid act on diameter d3, while the counter to the stress resulting from the interaction of the crowns of balls 93, 94 with the inner grooves 83a and 84a occurs on the larger d3 diameter d2, contributes to reducing the axial thrust on the balls and lastly, the friction during the relative rotation of the adapter body 90 with respect to the second inner body 80.

Therefore, low frictions during the rotation and/or the possibility of also executing high-pressure rotations are obtained due to the configuration hereto shown.

To provide a purely indicative parameter, the female coupling according to the present invention was tested at pressures of 35 MPa with optimal results in terms of resistance to rotation.

Lastly, through openings 99a for the insertion of the crowns of balls 93, 94 are conveniently provided on the adapter body 90, in particular on the front portion 91 of the adapter body 90. In the drawings, in particular in the sections in figure 6 and figure 7, one through opening 99a alone is shown, which allows the insertion of the first crown of balls 93, while the second opening for the insertion of the second crown of balls 94 cannot be seen on the sectional plane of figures 6 and 7.

The through openings 99a for the insertion of the crowns of balls advantageously are closed by expander plugs 99, for example of the "Koenig expander" type. The plug serves the function of closing the loading holes 99a of the balls 93, 94 by means of riveting, thus also ensuring that the correct position is kept during the operation of the coupling and at the same time, easy replacement when required.

Again, advantageously a dirt-guard ring 98 is provided between said adapter body 90 and said second inner body 80 in order to protect the crowns of balls 93, 94.

The dirt-guard ring or scraper 98 advantageously is made of NBR or of any other similar material. However, it is specifically configured not to make an airtight seal for the oil, and therefore allows any oil leak from the sealing element 95 to be identified.

## Claims

1. A quick-release coupling (1) of the type comprising an outer ring (10) which cooperates with a ball body (20) and a crown of locking balls (30), an axially movable outer slider (40) cooperating with said crown of locking balls (30), an axially movable inner slider (50), an axial valve body (60) and a first inner body (70), wherein said coupling further comprises in the rear area of said coupling (1) a second inner body (80) having cylindrical symmetry comprising a front portion (81) fixed to said ball body (20), an intermediate portion (82) and a rear portion (83) which extend rearwardly with respect to said ball body (20), said quick-release coupling (1) further comprising an adapter body (90) rotatably associated with said intermediate portion (82) and rear portion (83) of said second inner body (80), at least one bearing comprising at least one crown of balls (93, 94) being interposed between said second inner body (80) and said adapter body (90), wherein said adapter body (90) has a front portion (91) and a rear portion (92) and an inner profile counter-shaped with respect to the outer profile of said second inner body (80); wherein said front portion (81) of said second inner body (80) has an outer diameter (d1), said intermediate portion (82) has an outer diameter (d2) smaller than said outer diameter (d1) of said front portion and said rear portion (83) having an outer diameter (d3) in turn smaller than the outer diameter (d2) of said intermediate portion (82).

2. A quick-release coupling (1) according to claim 1, **characterized in that** said front portion (91) of said adapter body (90) faces said intermediate portion (82) of said second inner body (80), and said rear portion (92) of said adapter body (90) faces said rear portion (83) of said second inner body (80).

3. A quick-release coupling (1) according to claim 2, **characterized in that** said rear portion (92) of said adapter body (90) which faces said rear portion (83) of said second inner body (80) further comprises at least one housing seat (95a) housing a sealing element (95) configured to form the fluid seal between said adapter body (90) and the second inner body (80).

4. A quick-release coupling (1) according to preceding claim 3, **characterized in that** said sealing element (95) comprises a sliding shoe (96) and an O-ring (97).

5. A quick-release coupling (1) according to preceding claim 4, **characterized in that** said sliding shoe (96) is made of PTFE or other suitable material.

6. A quick-release coupling (1) according to preceding claim 4 or 5, **characterized in that** said sliding shoe (96) is housed within said housing seat (95a) so as to come into contact with said outer surface of said rear portion (83) of said second inner body (80) having a smaller diameter (d3) than the larger diameter (d2) of the intermediate portion (82), where said bearing is provided.

7. A quick-release coupling (1) according to any one of the preceding claims 1 to 6, **characterized in that** said bearing interposed between said second inner body (80) and said adapter body (90) comprises the at least one crown of balls (93, 94), preferably a first crown of balls (93) and a second crown of balls (94) arranged in circumferential housing grooves (83a, 84a, 93a, 94a) formed on the outer surface of said intermediate portion (82) of said second inner body (80) and on the inner surface of said front portion (91) of said adapter body (90).

8. A quick-release coupling (1) according to preceding claim 7, **characterized in that** said circumferential housing grooves (83a, 84a, 93a, 94a) comprise a first inner groove (83a) and a second inner groove (84a) formed at the outer surface of said intermediate portion (82) of said second inner body (80), and a first outer groove (93a) and a second outer groove (94a) formed at the inner surface of said front portion (91) of said adapter (90).

9. A quick-release coupling (1) according to preceding claim 7 or 8, **characterized in that** said circumferential housing grooves (83a, 84a, 93a, 94a) have a trapezoidal profile in cross-section with a longitudinal plane.

10. A quick-release coupling (1) according to one of the preceding claims 7 to 9, **characterized in that** said circumferential housing grooves (83a, 84a, 93a, 94a) comprise at least a hardened surface portion designed to make contact with said balls of said crowns of balls (93, 94), preferably by induction hardening.

11. A quick-release coupling (1) according to any one of the preceding claims, wherein said coupling is a female coupling.

## Patentansprüche

1. Schnellkupplung (1) des Typs umfassend einen Außenring (10), der mit einem Kugelkörper (20) und einem Kranz von Verriegelungskugeln (30) zusammenwirkt, ein axial bewegliches, äußeres Gleitstück (40), das mit dem Kranz von Verriegelungskugeln (30) zusammenwirkt, ein axial bewegliches, inneres Gleitstück (50), einen axialen Ventilkörper (60) und einen ersten Innenkörper (70), wobei die Kupplung ferner im hinteren Bereich der Kupplung (1) einen zweiten Innenkörper (80) mit zylindrischer Symmetrie und einen an dem Kugelkörper (20) befestigten, vorderen Abschnitt (81), einen Zwischenabschnitt (82) und einen hinteren Abschnitt (83) umfasst, der sich rückwärts in Bezug auf den Kugelkörper (20) erstreckt, wobei die Schnellkupplung (1) ferner einen Adapterkörper (90) umfasst, der mit dem Zwischenabschnitt (82) und dem hinteren Abschnitt (83) des zweiten Innenkörpers (80) drehbar verbunden ist, wenigstens ein Lager, umfassend wenigstens einen zwischen dem zweiten Innenkörper (80) und dem Adapterkörper (90) angeordneten Kugelkranz (93, 94), wobei der Adapterkörper (90) einen vorderen Abschnitt (91) und einen hinteren Abschnitt (92) und ein Innenprofil aufweist, das in Bezug auf das Außenprofil des zweiten Innenkörpers (80) gegenprofiliert ist; wobei
der vordere Abschnitt (81) des zweiten Innenkörpers (80) einen Außendurchmesser (d1) aufweist, der Zwischenabschnitt (82) einen Außendurchmesser (d2) aufweist, der kleiner als der Außendurchmesser (d1) des vorderen Abschnitts und des hinteren Abschnitts (83) ist, dessen Außendurchmesser (d3) wiederum kleiner als der Außendurchmesser (d2) des Zwischenabschnitts (82) ist.

2. Schnellkupplung (1) nach Anspruch 1, **dadurch gekennzeichnet, dass** der vordere Abschnitt (91) des Adapterkörpers (90) dem Zwischenabschnitt (82) des zweiten Innenkörpers (80) zugewandt ist und der hintere Abschnitt (92) des Adapterkörpers (90) dem hinteren Abschnitt (83) des zweiten Innenkörpers (80) zugewandt ist.

3. Schnellkupplung (1) nach Anspruch 2, **dadurch gekennzeichnet, dass** der hintere Abschnitt (92) des Adapterkörpers (90), der dem hinteren Abschnitt (83) des zweiten Innenkörpers (80) zugewandt ist, ferner wenigstens einen Gehäusesitz (95a) umfasst, der ein Dichtungselement (95) aufnimmt, das ausgestaltet ist, um die Fluiddichtung zwischen dem Adapterkörper (90) und dem zweiten Innenkörper (80) auszubilden.

4. Schnellkupplung (1) nach dem vorstehenden Anspruch 3, **dadurch gekennzeichnet, dass** das Dichtungselement (95) einen Gleitschuh (96) und einen O-Ring (97) umfasst.

5. Schnellkupplung (1) nach dem vorstehenden Anspruch 4, **dadurch gekennzeichnet, dass** der Gleitschuh (96) aus PTFE oder einem anderen geeigneten Material hergestellt ist.

6. Schnellkupplung (1) nach dem vorstehenden Anspruch 4 oder 5, **dadurch gekennzeichnet, dass** der Gleitschuh (96) in dem Gehäusesitz (95a) untergebracht ist, damit er mit der Außenfläche des hinteren Abschnitts (83) des zweiten Innenkörpers (80) in Kontakt kommt, dessen Durchmesser (d3) kleiner als der größere Durchmesser (d2) des Zwischenabschnitts (82) ist, in dem das Lager bereitgestellt ist.

7. Schnellkupplung (1) nach einem der vorstehenden Ansprüche 1 bis 6, **dadurch gekennzeichnet, dass** das zwischen dem zweiten Innenkörper (80) und dem Adapterkörper (90) angeordnete Lager wenigstens einen Kugelkranz (93, 94), vorzugsweise einen ersten Kugelkranz (93) und einen zweiten Kugelkranz (94) umfasst, der in umfangseitigen Gehäusenuten (83a, 84a, 93a, 94a) angeordnet ist, die auf der Außenfläche des Zwischenabschnitts (82) des zweiten Innenkörpers (80) und auf der Innenfläche des vorderen Abschnitts (91) des Adapterkörpers (90) gebildet sind.

8. Schnellkupplung (1) nach dem vorstehenden Anspruch 7, **dadurch gekennzeichnet, dass** die umfangseitigen Gehäusenuten (83a, 84a, 93a, 94a) eine erste Innennut (83a) und eine zweite Innennut (84a) umfassen, die auf der Außenfläche des Zwischenabschnitts (82) des zweiten Innenkörpers (80) gebildet sind, und eine erste Außennut (93a) und eine zweite Außennut (94a), die auf der Innenfläche des vorderen Abschnitts (91) des Adapters (90) gebildet sind.

9. Schnellkupplung (1) nach dem vorstehenden Anspruch 7 oder 8, **dadurch gekennzeichnet, dass** die umfangseitigen Gehäusenuten (83a, 84a, 93a, 94a) ein trapezförmiges Profil im Querschnitt mit einer Längsebene aufweisen.

10. Schnellkupplung (1) nach einem der vorstehenden Ansprüche 7 bis 9, **dadurch gekennzeichnet, dass** die umfangseitigen Gehäusenuten (83a, 84a, 93a, 94a) wenigstens einen, vorzugsweise durch Induktionshärten gehärteten, Oberflächenabschnitt umfassen, der zur Kontaktierung mit den Kugeln der Kugelkränze (93, 94) ausgebildet ist.

11. Schnellkupplung (1) nach einem der vorstehenden Ansprüche, wobei die Kupplung eine Kupplungsbuchse ist.

## Revendications

1. Raccord rapide (1) du type comprenant un anneau extérieur (10) qui coopère avec un corps de bille (20) et une couronne de billes d'arrêt (30), une glissière extérieure mobile axialement (40) coopérant avec ladite couronne de billes d'arrêt (30), une glissière intérieure mobile axialement (50), un corps de soupape axial (60) et un premier corps intérieur (70), dans lequel ledit raccord comprend en outre au niveau de la région arrière dudit raccord (1) un second corps intérieur (80) présentant une symétrie cylindrique comprenant une partie avant (81) fixée audit corps de bille (20), une partie intermédiaire (82) et une partie arrière (83) qui s'étendent vers l'arrière par rapport audit corps de bille (20), ledit raccord rapide (1) comprenant en outre un corps d'adaptateur (90) associé en rotation avec ladite partie intermédiaire (82) et ladite partie arrière (83) dudit second corps intérieur (80), au moins un palier comprenant au moins une couronne de billes (93, 94) étant interposé entre ledit second corps intérieur (80) et ledit corps d'adaptateur (90), dans lequel ledit corps d'adaptateur (90) a une partie avant (91) et une partie arrière (92) et un profil intérieur dont la forme correspond à celle du profil extérieur dudit second corps intérieur (80) ; dans lequel ladite partie avant (81) dudit second corps intérieur (80) a un diamètre extérieur (d1), ladite partie intermédiaire (82) a un diamètre extérieur (d2) inférieur audit diamètre extérieur (d1) de ladite partie avant et ladite partie arrière (83) ayant un diamètre extérieur (d3) lui-même inférieur au diamètre extérieur (d2) de ladite partie intermédiaire (82).

2. Raccord rapide (1) selon la revendication 1, **caractérisé en ce que** ladite partie avant (91) dudit corps d'adaptateur (90) fait face à ladite partie intermédiaire (82) dudit second corps intérieur (80), et ladite partie arrière (92) dudit corps d'adaptateur (90) fait face à ladite partie arrière (83) dudit second corps intérieur (80).

3. Raccord rapide (1) selon la revendication 2, **caractérisé en ce que** ladite partie arrière (92) dudit corps d'adaptateur (90) qui fait face à ladite partie arrière (83) dudit second corps intérieur (80) comprend en outre au moins un siège de logement (95a) qui loge un élément d'étanchéité (95) conçu pour former le joint d'étanchéité fluide entre ledit corps d'adaptateur (90) et le second corps intérieur (80).

4. Raccord rapide (1) selon la revendication précédente 3, **caractérisé en ce que** ledit élément d'étanchéité (95) comprend un patin glissant (96) et un joint torique (97).

5. Raccord rapide (1) selon la revendication précédente 4, **caractérisé en ce que** ledit patin glissant (96) est en PTFE ou un autre matériau adapté.

6. Raccord rapide (1) selon la revendication précédente 4 ou 5, **caractérisé en ce que** ledit patin glissant (96) est logé dans ledit siège de logement (95a) de façon à entrer en contact avec ladite surface extérieure de ladite partie arrière (83) dudit second corps intérieur (80) ayant un diamètre inférieur (d3) au diamètre plus grand (d2) de la partie intermédiaire (82), dans laquelle se trouve ledit palier.

7. Raccord rapide (1) selon l'une quelconque des revendications précédentes 1 à 6, **caractérisé en ce que** ledit palier interposé entre ledit second corps intérieur (80) et ledit corps d'adaptateur (90) comprend l'au moins une couronne de billes (93, 94), de préférence une première couronne de billes (93) et une seconde couronne de billes (94) disposées dans des rainures de logement circonférentielles (83a, 84a, 93a, 94a) formées sur la surface extérieure de ladite partie intermédiaire (82) dudit second corps intérieur (80) et sur la surface intérieure de ladite partie avant (91) dudit corps d'adaptateur (90).

8. Raccord rapide (1) selon la revendication précédente 7, **caractérisé en ce que** lesdites rainures de logement circonférentielles (83a, 84a, 93a, 94a) comprennent une première rainure intérieure (83a) et une seconde rainure intérieure (84a) formées sur la surface extérieure de ladite partie intermédiaire (82) dudit second corps intérieur (80), et une première rainure extérieure (93a) et une seconde rainure extérieure (94a) formées sur la surface intérieure de ladite partie avant (91) dudit adaptateur (90).

9. Raccord rapide (1) selon la revendication précédente 7 ou 8, **caractérisé en ce que** lesdites rainures de logement circonférentielles (83a, 84a, 93a, 94a) ont un profil trapézoïdal transversalement à un plan longitudinal.

10. Raccord rapide (1) selon l'une des revendications précédentes 7 à 9, **caractérisé en ce que** lesdites rainures de logement circonférentielles (83a, 84a, 93a, 94a) comprennent au moins une partie de surface durcie conçue pour entrer en contact avec lesdites billes de ladite couronne de billes (93, 94), de préférence par trempe par induction.

11. Raccord rapide (1) selon l'une quelconque des revendications précédentes, dans lequel ledit raccord est un raccord femelle.
